# EUROPÄISCHE PATENTSCHRIFT

(11) **EP 4 334 108 B1**
(45) Veröffentlichungstag und Bekanntmachung des Hinweises auf die Patenterteilung: **07.08.2024**
(21) Anmeldenummer: 23704322.9
(22) Anmeldetag: 08.02.2023
(51) Int. Cl.: B29C 45/76, B29C 45/50

(54) **SPRITZGIESSEINHEIT**
INJECTION MOLDING UNIT
UNITÉ DE MOULAGE PAR INJECTION

(30) Priorität: 09.02.2022 DE 102022103074
(43) Veröffentlichungstag der Anmeldung: 13.03.2024
(73) Patentinhaber: Arburg GmbH + Co KG, 72290 Loßburg (DE)
(72) Erfinder: BLETSCHER, Rainer, 72270 Baiersbronn (DE); FAULHABER, Werner, 72290 Loßburg Wittendorf (DE)
(74) Vertreter: RPK Patenanwälte Reinhardt und Kaufmann Partnerschaft mbB (Pforzheim)
(86) Internationale Anmeldenummer: PCT/EP2023/053082
(87) Internationale Veröffentlichungsnummer: WO 2023/152168

(56) Entgegenhaltungen:
- EP-A1- 1 741 538
- EP-A2- 1 642 697
- JP-A- 2000 117 789
- JP-A- H0 216 023
- US-A- 5 206 034

## Beschreibung

Die vorliegende Erfindung betrifft eine Spritzgießeinheit zur Verarbeitung von Kunststoffen und anderer plastifizierbarer Massen nach dem Oberbegriff des Anspruchs 1, eine Maschine zur Verarbeitung von Kunststoffen und anderer plastifizierbarer Massen, insbesondere eine Spritzgießmaschine, nach dem Oberbegriff des Anspruchs 10 sowie eine Vorrichtung zur Messung einer Kraft nach dem Oberbegriff des Anspruchs 11.

In dieser Anmeldung wird der Begriff "Kraft" verwendet, wobei damit auch immer ein entsprechender Druck gemeint sein soll. Entsprechendes gilt auch für einen Zug bzw. für eine Zugkraft. Dies gilt insbesondere auch für aufgeführte Gegenstände, wie beispielsweise einen Kraftsensor, bei dem auch immer ein entsprechender Drucksensor gemeint ist. Das gleiche gilt auch für eine Kraftmessung, bei der auch immer eine entsprechende Druckmessung gemeint ist. Umgekehrt soll ebenfalls das gleiche gelten, z.B. wenn ein Staudruck genannt ist, soll auch immer die entsprechende Kraft gemeint sein.

Zur Produktion präziser Formteile, z.B. aus Kunststoff, werden Spritzgießmaschinen zur Verarbeitung von Kunststoffen und anderer plastifizierbarer Massen verwendet werden, welche in der Regel wenigstens eine Spritzgießeinheit, welche das Material aufschmilzt, homogenisiert und in einen Formhohlraum einer Spritzgießform einspritzt, sowie wenigstens eine Schließeinheit aufweisen, welche die Spritzgießform schließt und den für das Formteil notwendigen Druck aufbringt. Für eine gute Qualität der Formteile ist unter anderem eine möglichst exakte Bestimmung des Schmelzedrucks während des Einspritzvorgangs unerlässlich, z.B. der Schmelzedruck vor der Schnecke und/oder der Rückstromsperre. Die Schnecke ist jedoch eine Maschinenkomponente, die sowohl rotatorisch als auch translatorisch während des gesamten Prozesses bewegbar ist. Diese Tatsache erschwert die direkte Bestimmung des Schmelzedrucks sowie die Messung von Einspritzdruck bzw. der Einspritzkraft.

Im Stand der Technik gibt es Systeme, mit denen der Druck direkt in der Schneckenvorkammer oder dem Formwerkzeug über einen Innendruckaufnehmer ermittelt wird. Die zugehörigen Bauteile und Sensoren befinden sich in der Schmelzekammer und sind somit sowohl der hohen Temperatur, dem Druck als auch der abrasiv wirkenden Fließgeschwindigkeit der Schmelze ausgesetzt. Diese Randbedingungen machen Innendruckmessungen verschleißbehaftet und kostenintensiv.

Aufgrund der oben genannten Probleme wird heute im Stand der Technik überwiegend indirekt und außerhalb der zentralen Einspritzachse gemessen, d.h. es wird eine Längenveränderung von einem oder mehreren Bauteilen, welche am Einspritzvorgang beteiligt sind, gemessen und die Längenveränderung in eine Dehnung respektive Kraft umgerechnet. Beispielsweise ist in der DE 101 14 006 A1 ein Kraftsensor außen an einem sich verformenden Gehäuseteil angebracht.

Weiter ist im Stand der Technik, z.B. in der DE 103 30 193 B3 eine Spritzgießmaschine mit einem Kraftsensor offenbart, welcher zwischen dem hinteren Ende der Schnecke und der Antriebswelle der Schnecke angeordnet ist, wobei ein mitrotierender Messwertverstärker sowie ein mit der Schnecke mitrotierender Sender vorgesehen sind. Die Signale des Sensors werden per Funk übertragen. Der Nachteil bei dieser Lösung ist, dass diese, unter anderem aufgrund der Übertragung der Signale per Funk sowie der speziell benötigten Messsensorik, sehr kostenintensiv, unverlässlich und fehlerbehaftet ist.

Die DE 195 25 142 C1 offenbart ein Verfahren zur Erfassung von an einem Fördermittel bzw. an einer Schnecke auftretenden Kräfte und eine Vorrichtung zur Durchführung des Verfahrens. Dafür sind zwei Sensoren vorgesehen, welche unterschiedliche Messbereiche abbilden. Je nach Kraft wird zwischen den Sensoren umgeschalten. Um sowohl eine positive als auch negative Kraft messen zu können, müssen jedoch die Sensoren vorgespannt werden und stehen somit dauerhaft unter einer Vorspannlast, welche sich negativ auf die Lebensdauer auswirken kann. Durch den vorgespannten Sensor wird das Verfahren bzw. die Vorrichtung erst in die Lage versetzt negative und positive Kräfte messen zu können. Der Sensor muss so stark vorgespannt werden, dass bei maximaler negativer Last der Sensor aufgrund der Entlastung immer noch eine Kraft anzeigen kann. Die positive Last kommt auf die dauerhafte Vorspannlast hinzu. Somit steht der Sensor bauartbedingt dauerhaft unter einer Vorspannlast, was sich negativ auf die Lebensdauer auswirken kann.

In der DE 603 18 349 T2 wird eine Schraube über eine Druckplatte in axialer Richtung verschoben, wobei die rotatorische Bewegung mittels eines Servomotors über ein Verbindungsglied erfolgt. Die Vorschub- und Rückzugsbewegungen der Druckplatte werden auf die Schraube über ein Lager, eine Kraftmesszelle und eine Einspritzwelle übertragen. Während des Füllprozesses wird der Harzdruck als Reaktionskraft durch die Kraftmesszeile detektiert.

Dokument DE 699 36 282 T2 offenbart eine Einspritzvorrichtung mit einem eingebauten Motor. Eine Kugelmutter ist an einem Rahmen über eine Kraftmesszeile befestigt und dient als ein Lastdetektionsmittel.

Die EP 17 415 38 A1 offenbart eine Einspritzeinheit für eine rotatorisch und translatorisch bewegte Einspritzschnecke. Mit einem Motor wird die Schnecke rotatorisch in Bewegung gesetzt und Material aufgeschmolzen, wodurch eine Bewegung z.B. nach rechts resultiert. Die Schnecke und das Drehübertragungselement drücken über eine Lagerung auf eine Druckmessdose, welche den entsprechenden Druck bzw. die Kraft misst.

In der JP 2000117789 A ist in einem Heizzylinder eine Schnecke als Antriebselement und Einspritzelement angeordnet. Ein Lagerkasten ist als Lagerhalteelement an der vorderen Endfläche einer beweglichen Platte durch eine Kraftmesszelle als ringförmiges Lasterfassungsmittel angebracht. Weiter wird eine Schraubentragwelle als Rotationsübertragungselement durch den Lagerkasten gestützt, um die von der Übertragungswelle übertragene Rotation auf die Schraube zu übertragen.

Eine Einspritzvorrichtung ist in der JPH0216023 A offenbart, welche eine genaue Messung des Harzdrucks in einem Einspritzvorgang durch eine bewegliche Installation einer Drehmomentaufnahmeplatte an einer in Richtung einer Einspritzachse montierten Zugstange erlaubt. Eine ringförmige Druckmessdose wird auf der Rückseite einer Druckplatte befestigt. Eine Kugelmutter ist an einer drehmomentaufnehmenden Platte befestigt. Die drehmomentaufnehmende Platte ist beweglich in eine Zugstange eingesetzt und mit einem Bolzen an der Druckmessdose befestigt.

Die US 5,206,034 A offenbart eine Spritzgießmaschine mit einer Führungskupplung zur Übertragung einer linearen Bewegung eines Kugelumlaufspindelmechanismus und eine Schneckenkupplung zur Übertragung einer Drehbewegung. Der Druck der Schnecke wird mittels einer Lagerung über eine Verformung zwischen einem inneren und einem äußeren rohrförmigen Teil mit einer Druckmessdose gemessen.

Die EP 1 642 697 A2 offenbart eine Einspritzeinheit, wobei die Schnecke in einem Gehäuse gedreht werden und sich in axiale Richtung bewegen kann, wobei der Druck oder die Kraft über ein Drehübertragungselement und eine Detektionsvorrichtung gemessen wird.

Ausgehend von diesem Stand der Technik liegt der vorliegenden Erfindung die Aufgabe zugrunde eine vorteilhaft einfache, kostengünstige, präzise und verlässliche Bestimmung der bezüglich einer Schnecke einer Spritzgießeinheit oder einer Maschinenkomponente einer Spritzgießmaschine ausgeübten Kraft, z.B. der Stau- und/oder Einspritzkraft bzw. des entsprechenden Drucks, zu ermöglichen.

Diese Aufgabe wird durch eine Spritzgießeinheit mit den Merkmalen des Anspruchs 1, durch eine Maschine zur Verarbeitung von Kunststoffen und anderer plastifizierbarer Massen, insbesondere eine Spritzgießmaschine mit den Merkmalen des Anspruchs 10 sowie durch eine Vorrichtung zur Messung einer Kraft mit den Merkmalen des Anspruchs 11 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

In der Spritzgießeinheit wird ein Material, z.B. ein Kunststoff in einem Schneckenzylinder aufgeschmolzen und während des Einspritzvorgangs z.B. in ein Formwerkzeug gespritzt. Die Schnecke führt dabei sowohl Rotationsbewegungen um eine Schneckenachse als auch Translationsbewegungen in einer axialen Richtung entlang der Schneckenachse aus. Für die rotatorische Bewegung der Schnecke um die Schneckenachse ist die Schnecke mit wenigstens einem Motor verbunden. Die Schnecke kann beispielsweise mit der Motorwelle des Motors verbunden sein. Für die translatorische Bewegung ist wenigstens ein Antrieb vorgesehen, welcher die Schnecke unabhängig von der rotatorischen Bewegung in axialer Richtung entlang der Schneckenachse in dem Schneckenzylinder bewegt. Weiter können eine Dosiereinheit und eine Einspritzeinheit vorgesehen sein, welche mit der Schnecke verbunden sind. Über die Dosiereinheit kann eine Rotationsbewegung der Schnecke erfolgen, indem die Schnecke beispielsweise mit der Motorwelle des Motors der Dosiereinheit oder direkt mit dem Motor der Dosiereinheit verbunden ist. Mittels der Einspritzeinheit kann eine translatorische Bewegung der Schnecke in axialer Richtung entlang der Schneckenachse innerhalb des sie aufnehmenden Schneckenzylinders, z.B. für die Einspritzbewegung erfolgen.

Weiter weist die Spritzgießeinheit wenigstens einen Kraftsensor, z.B. eine Lastmessdose, einen Biegebalken, einen Bimetallstreifen oder ein DMS-Bauteil zur Kraftmessung und/oder zur Bestimmung der bezüglich der Schnecke der Spritzgießeinheit ausgeübten Kraft, z.B. der Stau- und/oder der Einspritzkraft bzw. des entsprechenden Drucks auf. Für eine vorteilhaft einfache, kostengünstige, präzise und verlässliche Bestimmung der bezüglich der Schnecke der Spritzgießeinheit ausgeübten Kraft ist der Kraftsensor drehfest gegenüber der rotatorischen Bewegung der Schnecke angeordnet und es ist wenigstens ein Entkopplungselement vorgesehen, welches auf die und/oder von der Schnecke in axialer Richtung entlang und/oder parallel zur Schneckenachse ausgeübte Kräfte von anderen auf die und/oder von der Schnecke ausgeübten Kräften, z.B. Kräfte in radialer und/oder tangentialer Richtung, Radialkräfte, Tangentialkräfte entkoppelt, wobei der Kraftsensor dazu eingerichtet ist, die auf die und/oder von der Schnecke in axialer Richtung entlang und/oder parallel zur Schneckenachse ausgeübte Kraft zu erfassen. Dabei sind die auf die Schnecke ausgeübten Kräfte Kräfte, welche "von außen" mittelbar und/oder unmittelbar auf die Schnecke wirken, z.B. durch einen sich aufbauenden Staudruck, während von der Schnecke ausgeübte Kräfte Kräfte sind, welche von der Schnecke mittelbar und/oder unmittelbar auf andere Teile oder Maschinenkomponenten wirken, z.B. wird die Schnecke durch den Staudruck nach hinten gedrückt und drückt mittelbar und/oder unmittelbar gegen den Kraftsensor.

Bei der Kraftmessung und/oder bei der Bestimmung der bezüglich der Schnecke der Spritzgießeinheit ausgeübten Kraft ist die Rotationsbewegung der Schnecke somit entkoppelt von der Bewegung der Schnecke in axialer Richtung entlang und/oder parallel zur Schneckenachse, wodurch sich vorteilhaft eine genaue Messung der Kraft, z.B. der Stau- und/oder der Einspritzkraft ergibt, da insbesondere keine Rotationsanteile der Kraft erfasst werden. Vorteilhaft ist es so auch möglich, die Kraft und/oder den Druck in axialer Richtung entlang und/oder parallel zur Schneckenachse während der Rotationsbewegung der Schnecke losgelöst von anderen Kraftkomponenten zu erfassen. Insgesamt ergibt sich so vorteilhaft eine Verbesserung der Regelgüte sowie der Formteilqualität. Weiter wird keine spezielle Messsensorik, wie beispielsweise eine Funkübertragung benötigt, wodurch sich ein Vorteil in wirtschaftlicher Hinsicht ergibt. Durch die bevorzugte Entkopplung der Rotationsbewegung der Schnecke um die Schneckenachse von der Translationsbewegung der Schnecke in axialer Richtung entlang der und/oder parallel zur Schneckenachse werden weiter vorteilhaft Störeinflüsse vermieden. Durch die Entkopplung der rotatorischen Bewegung können weiter vorteilhaft ortsfeste Sensoren, z.B. ein Kraftsensor eingesetzt werden, welche z.B. über eine Verkabelung Messwerte verlustfrei an eine Auswerteeinheit übermitteln. Weiter vorteilhaft ist keine rotationstaugliche Energieversorgung erforderlich, wodurch sich eine präzise und störungsunempfindliche Messung ergibt.

Der Kraftsensor ist so eingerichtet, ausgeführt und angeordnet, dass der Kraftsensor sowohl eine an der Schnecke ziehende als auch drückende Kraft misst. Vorteilhaft lässt sich so der komplette Spritzgießprozess abbilden, da die Schnecke während des Spritzgießprozesses translatorische Bewegungen in verschiedene Richtungen ausführt. Beispielsweise wird während dem Dosieren die Schnecke von der Düse weggedrückt, während die Schnecke im Zustand des "Dekompression Ziehen" oder des "Negativen Staudrucks" in Richtung der Düse gezogen wird.

Die Einspritzwelle, das Entkopplungselement, das Lagerelement, die Schnecke und/oder der Einspritzkörper sind als quasi steif ausgeführt. Quasi steif bedeutet in diesem Zusammenhang, dass diese Teile im Wesentlichen unnachgiebig sind und bei ihnen beispielsweise keine Verformungen und/oder Verbiegungen auftreten, insbesondere treten zumindest keine relevanten Längenänderungen der Teile aufgrund des auf sie wirkenden Drucks auf. "Quasi" deswegen, da ein Teil bei einem auf ihn wirkenden Druck immer etwas verformt und/oder verbogen wird. Vorteilhaft kann somit der Einspritzdruck bzw. die Einspritzkraft zentral und nahezu direkt hinter der Schneckenvorraumkammer abgenommen werden ohne den Einfluss weiterer Störgrößen.

Die Translationsbewegung der Schnecke kann wenigstens eine durch die Rotationsbewegung der Schnecke hervorgerufene Translationsbewegung umfassen. Beispielsweise führt die Schnecke während des Dosierens eine Rotationsbewegung aus, wodurch Schmelze zur Düse gefördert wird und sich ein Druck bildet. Durch den Druck, den die Schmelze ausübt, wird die Schnecke zurückgedrückt bzw. erfährt die Schnecke eine Bewegung von der Düse weg, sodass die Schnecke eine translatorische Bewegung nach hinten ausführt. Die Bewegung der Schnecke nach hinten kann gebremst werden, beispielsweise hydraulisch oder elektrisch. Durch den sich dadurch aufbauenden Staudruck wird die Schmelze verdichtet. Durch das Entkopplungselement kann vorteilhaft die Wirkung der Rotationsbewegung eliminiert werden und die durch die Rotation hervorgerufene translatorische Bewegung nach hinten bzw. die entsprechende Kraft erfasst werden. Weiter vorteilhaft kann so eine Kraftmessung direkt in der Kraftachse ohne die Verformung anderer im Kraftrahmen verbauten Komponenten erfolgen.

Das Entkopplungselement ist bevorzugt mit wenigstens einem gegenüber der rotatorischen Bewegung der Schnecke drehfesten Teil der Spritzgießeinheit sowie mit wenigstens einem von der rotatorischen Bewegung der Schnecke abhängigen Teil der Spritzgießeinheit und/oder der Schnecke wirkverbunden. Vorteilhaft ergibt sich so eine vollständige Entkopplung der rotatorischen von der translatorischen Bewegung der Schnecke. Ein von der rotatorischen Bewegung der Schnecke abhängiges Teil der Spritzgießeinheit in diesem Zusammenhang beschreibt ein Teil, das z.B. mit der Schnecke rotiert.

Bevorzugt ist der Kraftsensor in wenigstens einem zumindest teilweise, weiter bevorzugt komplett um die Schneckenachse verlaufenden Bereich angeordnet. Beispielsweise kann der Kraftsensor in einem Bereich eines um die Schneckenachse umlaufenden Kreisrings und/oder Kreissegments angeordnet sein, wodurch sich vorteilhaft eine einfache Kraftmessung ergibt. Weiter vorteilhaft ergibt sich so ein platzsparender Aufbau.

Für eine vorteilhaft genaue Messung ist der Kraftsensor symmetrisch um die Schneckenachse angeordnet. Durch die symmetrische Anordnung ergibt sich weiter vorteilhaft eine genauere Messung, da die Messung auf einer größeren Fläche, über mehrere Messpunkte (z.B. mittels eines DMS-Bauteils) und an verschiedenen Positionen um die Schneckenachse erfolgen kann, mit welchen bevorzugt ein Mittelwert der Messung erfasst werden kann.

Für eine vorteilhaft präzise und verlässliche Messung können bevorzugt eine Einspritzhülse und ein Einspritzkörper vorgesehen sein, wobei die Einspritzhülse umgeben von dem Einspritzkörper angeordnet und der Kraftsensor mit der Einspritzhülse und dem Einspritzkörper verbunden ist. Prinzipiell kann der Kraftsensor auch mit einem Teil einer die Spritzgießeinheit aufweisenden Maschine, z.B. einer Spritzgießmaschine und/oder einem anderen Teil der Spritzgießeinheit verbunden sein, solange die Kraftmessung davon unbeeinflusst durchgeführt werden kann. Weiter bevorzugt ist der Kraftsensor unmittelbar mit der Einspritzhülse und/oder dem Einspritzkörper verbunden.

Bevorzugt ist der Kraftsensor in einem unbelasteten Zustand kraftfrei. Vorteilhaft ergibt sich so eine längere Lebensdauer des Kraftsensors. Mit einem unbelasteten Zustand ist gemeint, dass in diesem Zustand zumindest keine "Messkräfte" auf den Kraftsensor wirken, also dass z.B. kein Dosieren oder kein Einspritzen erfolgt, sich kein Staudruck aufbaut oder die Zustände "negativer Staudruck" oder "Dekompression ziehen" nicht vorliegen. Im unbelasteten Zustand greifen am Kraftsensor keine Kräfte an, welche mit dem Spritzgießprozess assoziiert sind. Ein unbelasteter Zustand liegt beispielsweise aber auch vor, wenn die Spritzgießeinheit nicht in Betrieb ist. Im unbelasteten Zustand ist der Kraftsensor lediglich eingebaut, bevorzugt kraftfrei eingebaut. Durch den kraftfreien Einbau des Kraftsensors lässt sich der Sensor bei einem Kraftangriff entsprechend in beide Richtungen gleichermaßen auslenken und die Verformung kann z.B. mittels einer Lastmessdose, einem Biegebalken, einem Bimetallstreifen, einem DMS-Bauteil oder DMS-Messelementen gemessen und in eine Kraft umgerechnet werden. Weiter bevorzugt ist der Kraftsensor im unbelasteten Zustand nicht vorgespannt.

Durch die Entkopplung der auf die und/oder von der Schnecke ausgeübten Kräfte, z.B. in radialer und axialer Richtung und/oder deren entsprechenden Bewegungen können die auftretenden Kräfte vorteilhaft direkt hinter der Schnecke erfasst und verarbeitet werden. Bevorzugt erfolgt die Kraftmessung im Wesentlichen entlang und/oder parallel zur Schneckenachse der Schnecke. Weiter bevorzugt erfolgt die Kraftmessung in direkter Verlängerung der Schnecke, also in der Spritzachse bzw. der Mittelachse der Schnecke, wodurch vorteilhaft eine hohe Genauigkeit der Messdaten erreicht wird, da z.B. Störeinflüsse aufgrund von toleranzbehafteten Komponenten und der daraus resultierenden Messungenauigkeiten und Messschwankungen eliminiert werden. Ebenfalls vorteilhaft ergibt sich dadurch eine feinfühligere Ermittlung von Kraft- bzw. Druckschwankungen. In direkter Verlängerung bedeutet in diesem Zusammenhang, dass die Messung der Kraft, welche auf die Schnecke wirkt, direkt erfolgt und nicht beispielsweise indirekt z.B. über Auslenkungen anderer Maschinenkomponenten gemessen wird. Weiter vorteilhaft fallen im Vergleich zu beispielsweise indirekten Messungen von Bauteilverformungen im äußeren Kraftrahmen durch die quasi direkte Messung die toleranzbehafteten Messabweichungen der beteiligten Komponenten weg.

Weiter bevorzugt wirkt die Kraft für die Kraftmessung im Wesentlichen entlang und/oder parallel der Schneckenachse. Vorteilhaft werden so keine Kraftanteile von anderen Komponenten erfasst, welche beispielsweise einen Winkel größer als 0 Grad, z.B. von 90 Grad zur Schneckenachse aufweisen, sodass sich eine genauere Messung ergibt.

Bevorzugt ist das Entkopplungselement, z.B. ein Axiallager, und/oder wenigstens ein Lagerelement, z.B. ein Schrägkugellager, zur Lagerung einer Einspritzwelle und/oder der Schnecke, in der Einspritzhülse angeordnet, wobei das Entkopplungselement und/oder das Lagerelement die Einspritzwelle und/oder die Schnecke in der Einspritzhülse so lagert, dass die Einspritzwelle und/oder die Schnecke drehbar gegenüber der Einspritzhülse ist. Beim Einspritzen z.B. steht die Schnecke und die Einspritzhülse wird aufgrund der Einspritzkraft translatorisch bewegt. Beim Dosieren oder bei der Betriebskraft Staudruck dreht sich zwar die Schnecke aber über die Kombination von Entkopplungs- und Lagerelement wird die Rotation in Bezug auf die Einspritzhülse eliminiert und nur die translatorische Bewegung und/oder die entlang und/oder parallel zur Schneckenachse axial wirkenden Kräfte werden bevorzugt in beiden Richtungen von dem Kraftsensor, z.B. einer Lastmessdose erfasst und/oder ausgewertet.

Um eine vorteilhaft kompakte Bauform zu erhalten, ist der Kraftsensor bevorzugt zwischen dem Motor, z.B. dem Dosiermotor und der Einspritzhülse angeordnet.

Weiter bevorzugt ist zwischen dem Kraftsensor und der Schnecke lediglich die Einspritzhülse angeordnet. Vorteilhaft ergibt sich so eine genauere Messung gegenüber anderen Lösungen, bei denen z.B. ein Antriebsteil oder ein Motorteil zwischen Kraftsensor und Schnecke angeordnet ist und somit aufgrund der Nachgiebigkeit dieser Bauteile die Messung ungenauer macht. Durch die Lagerung in der Einspritzhülse wird die Rotation aus dem System genommen und es sind keine weiteren Bauteile mehr im Kraftrahmen, welche eine Stauchung erfahren können und somit die Messung ungenauer machen. Die Kraftmessung erfolgt somit direkt hinter der der Schneckenkupplung, sodass vorteilhaft Einflussfaktoren von "nachgiebigen" Bauteilen minimiert werden. Der Kraftfluss in axialer Richtung weist ausgehend von der Schnecke bevorzugt lediglich die Einspritzhülse mit der Einspritzwelle, dem Lager- und Entkopplungselement vor dem Kraftsensor auf. Betrachtet man den Kraftfluss so ist lediglich die Schnecke, die Einspritzhülse mit der Einspritzwelle, dem Lager- und Entkopplungselement "in Reihe" mit dem Kraftsensor geschalten.

Die Aufgabe wird zudem durch eine Maschine zur Verarbeitung von Kunststoffen und anderer plastifizierbarer Massen, insbesondere durch eine Spritzgießmaschine gelöst, wobei die Maschine wenigstens eine oben beschriebene Spritzgießeinheit mit den aufgeführten Vorteilen aufweist.

Eine Vorrichtung zur Messung einer auf eine um eine Achse rotatorisch und entlang zur Achse translatorisch bewegte Maschinenkomponente einer Maschine zur Verarbeitung von Kunststoffen und anderer plastifizierbarer Massen, insbesondere einer Spritzgießmaschine, ausgeübten Kraft löst ebenfalls die Aufgabe, wobei die Vorrichtung dazu eingerichtet ist, um wenigstens eine auf die und/oder von der Maschinenkomponente ausgeübte axiale Kraft von anderen auf die und/oder von der Maschinenkomponente ausgeübten Kräfte zu entkoppeln und die entkoppelte axiale Kraft zu erfassen, wodurch vorteilhaft eine einfache, kostengünstige, präzise und verlässliche Bestimmung der bezüglich der Maschinenkomponente ausgeübten Kraft bzw. des entsprechenden Drucks ermöglicht wird. Dabei sind die auf die Maschinenkomponente ausgeübten Kräfte Kräfte, welche "von außen" mittelbar und/oder unmittelbar auf die Maschinenkomponente wirken, während von der Maschinenkomponente ausgeübte Kräfte Kräfte sind, welche von der Maschinenkomponente mittelbar und/oder unmittelbar auf andere Teile oder Maschinenkomponenten wirken. Als Vorteile ergeben sich bei dieser Ausführungsform die oben hinsichtlich der Gestaltung der Spritzgießeinheit genannten Vorteile. Der Kraftsensor ist so eingerichtet, ausgeführt und angeordnet, dass der Kraftsensor sowohl eine an der Maschinenkomponente ziehende als auch eine an der Maschinenkomponente drückende Kraft misst. Das Entkopplungselement, das Lagerelement und/oder die Maschinenkomponente sind als quasi steif ausgeführt.

Bevorzugt weist die Vorrichtung wenigstens einen Kraftsensor auf, welcher drehfest gegenüber der rotatorischen Bewegung der Maschinenkomponente angeordnet ist. Weiter weist die Vorrichtung wenigstens ein Entkopplungselement auf, welches auf die und/oder von der Maschinenkomponente in axialer Richtung entlang der und/oder parallel zur Achse ausgeübte Kräfte von anderen auf die und/oder von der Maschinenkomponente ausgeübten Kräften entkoppelt. Der Kraftsensor ist dazu eingerichtet, die auf die und/oder von der Maschinenkomponente in axialer Richtung entlang und/oder parallel zur Achse ausgeübte Kraft zu erfassen.

Weiter bevorzugt umfasst die translatorische Bewegung der Maschinenkomponente wenigstens eine durch die rotatorische Bewegung der Maschinenkomponente hervorgerufene translatorische Bewegung.

Das Entkopplungselement ist bevorzugt mit wenigstens einem in Bezug auf die rotatorische Bewegung der Maschinenkomponente drehfesten Teil sowie mit wenigstens einem von der rotatorischen Bewegung der Maschinenkomponente abhängigen Teil und/oder der Maschinenkomponente wirkverbunden.

Der Kraftsensor ist bevorzugt in wenigstens einem zumindest teilweise um die Achse verlaufenden Bereich angeordnet und/oder symmetrisch zur Achse angeordnet.

Die Kraftmessung erfolgt bevorzugterweise im Wesentlichen entlang und/oder parallel zu der Achse der Maschinenkomponente.

Vorteilhaft für eine längere Lebensdauer des Kraftsensors ist bevorzugt der Kraftsensor in einem unbelasteten Zustand kraftfrei. Mit einem unbelasteten Zustand ist gemeint, dass in diesem Zustand zumindest keine "Messkräfte" auf den Kraftsensor wirken, also dass z.B. kein Dosieren oder kein Einspritzen erfolgt, sich kein Staudruck aufbaut oder die Zustände "negativer Staudruck" oder "Dekompression ziehen" nicht vorliegen. Im unbelasteten Zustand greifen am Kraftsensor keine Kräfte an, welche mit dem Spritzgießprozess assoziiert sind. Ein unbelasteter Zustand liegt beispielsweise aber auch vor, wenn die Spritzgießeinheit nicht in Betrieb ist. Im unbelasteten Zustand ist der Kraftsensor lediglich eingebaut, bevorzugt kraftfrei eingebaut. Durch den kraftfreien Einbau des Kraftsensors lässt sich der Sensor bei einem Kraftangriff entsprechend in beide Richtungen gleichermaßen auslenken und die Verformung kann z.B. mittels einer Lastmessdose, einem Biegebalken, einem Bimetallstreifen, einem DMS-Bauteil oder DMS-Messelementen gemessen und in eine Kraft umgerechnet werden. Weiter bevorzugt ist der Kraftsensor im unbelasteten Zustand nicht vorgespannt.

Bevorzugt ist der Kraftsensor mit einer Einspritzhülse und einem Einspritzkörper verbunden, wobei die Einspritzhülse umgeben von dem Einspritzkörper angeordnet ist. Vorteilhaft ergibt sich so eine präzise und verlässliche Messung. Weiter bevorzugt ist der Kraftsensor unmittelbar mit der Einspritzhülse verbunden.

Weiter bevorzugt ist zwischen dem Kraftsensor und der Maschinenkomponente lediglich die Einspritzhülse angeordnet. Vorteilhaft weist der Kraftrahmen somit keine weiteren "nachgiebigen" Bauteile auf, welche zu einer ungenaueren Messung führen.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: einen Schnitt durch eine Spritzgießeinheit,
- Fig. 2: eine vergrößerte Detailansicht aus Fig. 1,
- Fig. 3: eine Detailansicht gemäß Fig. 2 mit eingezeichnetem Kraftverlauf während dem Einspritzen und/oder Dosieren,
- Fig. 4: eine Detailansicht gemäß Fig. 2 mit einem eingezeichneten Kraftverlauf während dem Betriebszustand "Dekompression Ziehen" oder "negativer Staudruck",

- Fig. 5: eine Spritzgießmaschine,
- Fig. 6: einen Schnitt durch eine Spritzgießeinheit.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Wenn in dieser Anmeldung der Begriff "Kraft" verwendet wird, soll damit auch immer ein entsprechender Druck gemeint sein. Entsprechendes gilt auch für einen Zug bzw. für eine Zugkraft. Dies gilt insbesondere auch für aufgeführte Gegenstände, wie beispielsweise einem Kraftsensor, bei dem auch immer ein entsprechender Drucksensor gemeint ist. Das gleiche gilt auch für eine Kraftmessung, bei der auch immer eine entsprechende Druckmessung gemeint ist. Umgekehrt soll ebenfalls das gleiche gelten, z.B. wenn ein Staudruck genannt ist soll auch immer die entsprechende Kraft gemeint sein.

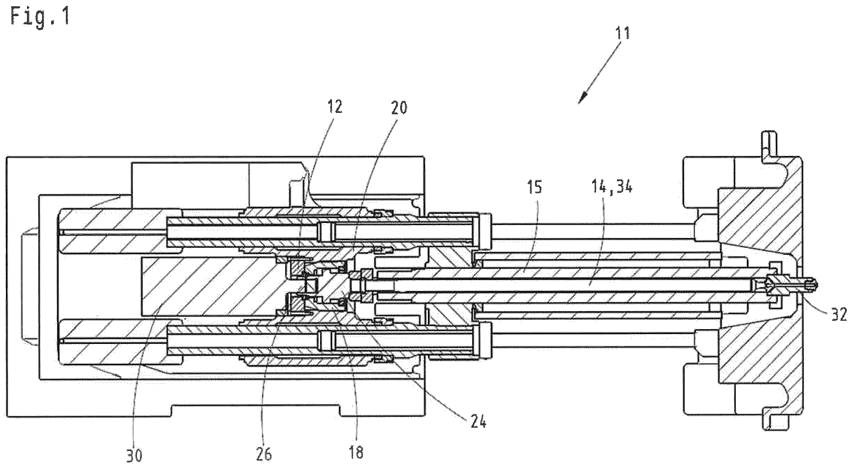

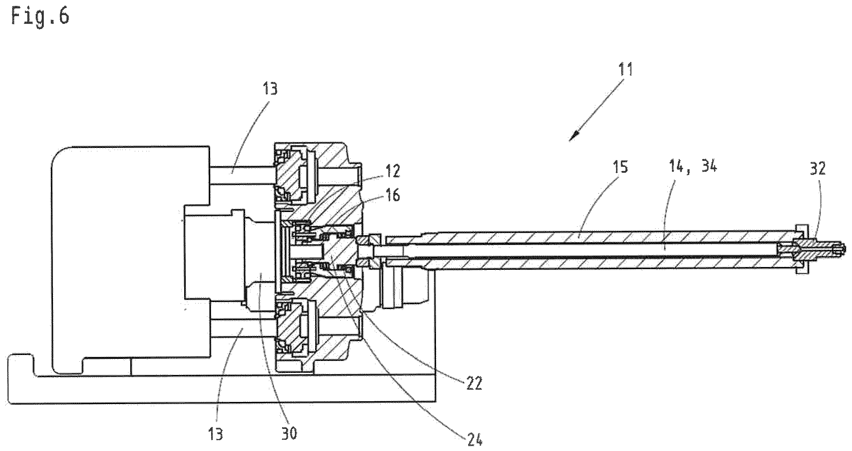

Ein Ausführungsbeispiel zeigt in Fig. 1 eine Spritzgießeinheit 11 mit einer Schnecke 14, welche in einem Schneckenzylinder 15 aufgenommen ist. Die Schnecke 14 kann beispielsweise in einem Ausführungsbeispiel gemäß Fig. 6 über einen Motor 30 rotatorisch um eine Schneckenachse A-A und unabhängig von der Rotationsbewegung der Schnecke 14 über einen Antrieb 13, z.B. einen Spindelantrieb oder ein Planetenrollengewindeantrieb translatorisch in axialer Richtung entlang der Schneckenachse A-A bewegt werden. Im Ausführungsbeispiel gemäß Fig. 6 bewegt der Antrieb 13 die Spritzgießeinheit 11 mitsamt dem Motor 30 und der Schnecke 14. Ein Kraftsensor 12, z.B. eine Lastmessdose, ein Biegebalken, ein Bimetallstreifen oder ein DMS-Bauteil, ist zur Kraftmessung und/oder zur Bestimmung der bezüglich der Schnecke 14 der Spritzgießeinheit 11 ausgeübten Kraft vorgesehen.

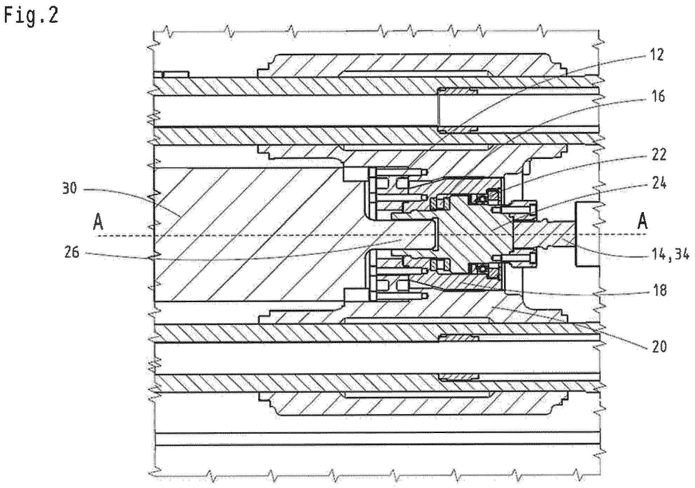

Fig. 2 zeigt einen vergrößerten Ausschnitt aus Fig. 1 der Spritzgießeinheit 11. Die Schnecke 14 ist im Ausführungsbeispiel mit einer Einspritzwelle 24 verbunden, welche wiederum mit einer Motorwelle 26 des Motors 30 verbunden ist. Prinzipiell könnte die Schnecke 14 jedoch auch direkt mit der Motorwelle 26 oder dem Motor 30 verbunden sein. Führt die Schnecke 14 eine Rotationsbewegung um die Schneckenachse A-A aus, rotiert die Einspritzwelle 24 entsprechend mit. Der Kraftsensor 12 ist drehfest gegenüber der rotatorischen Bewegung der Schnecke 14 angeordnet.

Weiter ist ein Entkopplungselement 16, z.B. ein Axiallager vorgesehen, welches auf die und/oder von der Schnecke 14 in axialer Richtung entlang und/oder parallel zur Schneckenachse A-A ausgeübte Kräfte von anderen auf die und/oder von der Schnecke 14 ausgeübten Kräften, z.B. in radialer und/oder tangentialer Richtung, Radialkräfte, Tangentialkräfte entkoppelt. Der Kraftsensor 12 ist dazu eingerichtet, die auf die und/oder von der Schnecke 14 in axialer Richtung entlang und/oder parallel zur Schneckenachse A-A ausgeübte Kraft zu erfassen. Würde sich beispielsweise die Schnecke 14 in Fig. 2 aufgrund einer auf die Schnecke 14 wirkenden (Druck-bzw. Zug-)Kraft nach links bzw. rechts bewegen und die Schnecke 14 gleichzeitig um die Schneckenachse A-A rotieren, kann z.B. die auf die und/oder von der Schnecke 14 ausgeübte axiale von der radialen und/oder tangentialen Kraft entkoppelt werden und mit dem Kraftsensor 12 die axiale Kraft entlang und/oder parallel zur Schneckenachse A-A und/oder die entsprechende translatorische Bewegung erfasst werden.

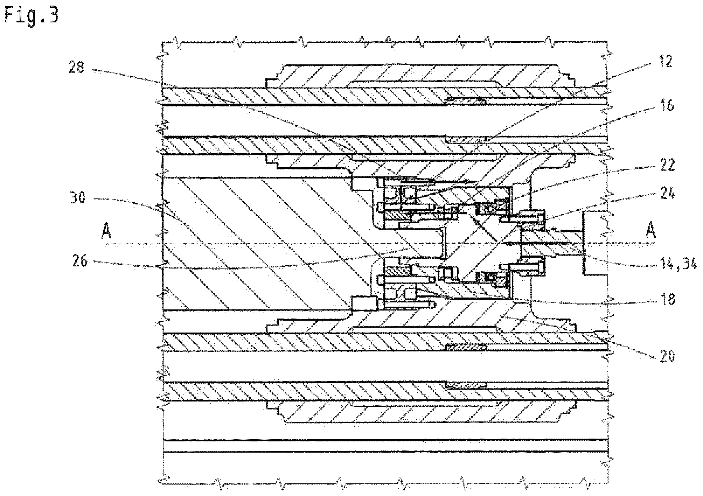

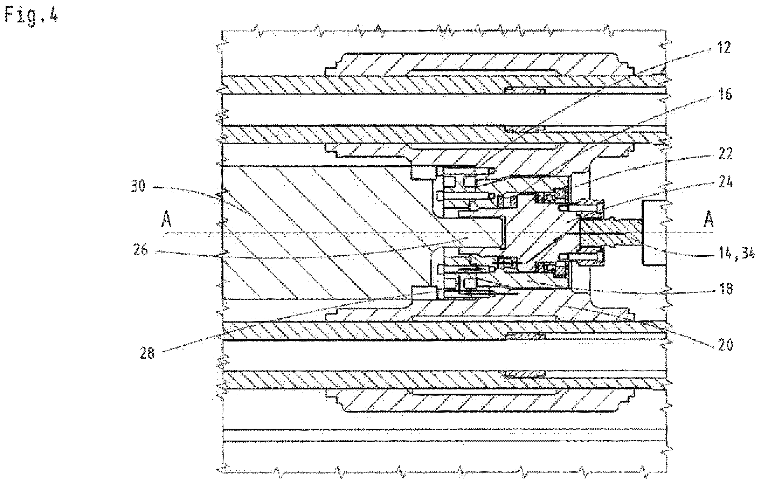

Gemäß Fig. 2 ist der Kraftsensor 12 so ausgeführt und angeordnet, dass der Kraftsensor 12 sowohl eine an der Schnecke 14 ziehende als auch drückende Kraft misst. Dies wird später anhand der Ausführungen bzgl. der Fig. 3 und 4 näher erläutert. Vorteilhaft kann so der komplette Spritzgießprozess abgebildet werden, wodurch sich eine Verbesserung des Formteils und der Regelgüte ergibt. Die Einspritzwelle 24, das Entkopplungselement 16, das Lagerelement 22, die Schnecke 14 und/oder der Einspritzkörper 20 sind als quasi steif ausgeführt. Dadurch können vorteilhaft weitere die Messung verfälschende Störgrößen vermieden werden.

Das Entkopplungselement 16 kann in einem weiteren Ausführungsbeispiel gemäß Fig. 2 mit wenigstens einem in Bezug auf die rotatorische Bewegung der Schnecke 14 drehfesten Teil der Spritzgießeinheit 11 sowie mit wenigstens einem von der rotatorischen Bewegung der Schnecke 14 abhängigen Teil der Spritzgießeinheit 11 und/oder der Schnecke 14 wirkverbunden sein. Im Ausführungsbeispiel in Fig. 2 ist das Entkopplungselement 16 einerseits mit der Einspritzwelle 24 und einer Einspritzhülse 18 verbunden, wobei die Einspritzhülse 18 gegenüber der Einspritzwelle 24 und/oder der Schnecke 14 drehfest ist. Prinzipiell könnte aber auch die Schnecke 14 so ausgestaltet sein, dass das Entkopplungselement 16 anstatt mit der Einspritzwelle 24 direkt mit der Schnecke 14 verbunden ist.

In einem weiteren Ausführungsbeispiel ist der Kraftsensor 12 in wenigstens einem zumindest teilweise, in einem weiteren bevorzugten Ausführungsbeispiel gemäß Fig. 2 komplett um die Schneckenachse A-A verlaufenden Bereich angeordnet. In einem weiteren Ausführungsbeispiel gemäß Fig. 2 ist der Kraftsensor 12 in wenigstens einem Bereich eines komplett um die Schneckenachse A-A umlaufenden Kreisrings und/oder Kreissegments angeordnet.

In einem weiteren Ausführungsbeispiel gemäß Fig. 2 ist der Kraftsensor 12 symmetrisch zur Schneckenachse A-A angeordnet. Beispielsweise kann der Kraftsensor als ein DMS-Bauteil oder eine Lastmessdose ausgeführt sein, welche beispielsweise eine symmetrische Bauform aufweisen.

Gemäß Fig. 2 sind in einem weiteren Ausführungsbeispiel die Einspritzhülse 18 und ein Einspritzkörper 20 vorgesehen, wobei die Einspritzhülse 18 umgeben von dem Einspritzkörper 20 angeordnet und der Kraftsensor 12 mit der Einspritzhülse 18 und dem Einspritzkörper 20 verbunden ist. Der Einspritzkörper 20 kann über den Antrieb 13 bewegt werden, wobei sich dadurch ebenfalls z.B. der Motor 30 und die Schnecke 14 bewegt. Die Einspritzhülse 18 wirkt in dem Ausführungsbeispiel in Fig. 2 mit anderen Worten als ein Kraftübertragungsmittel, welches die an der Schnecke 14 angreifende Kraft an den Kraftsensor 12 überträgt.

Die Kraftmessung erfolgt in einem weiteren Ausführungsbeispiel in Fig. 2 im Wesentlichen entlang und/oder parallel zur Schneckenachse A-A der Schnecke 14 und weiter bevorzugt in direkter Verlängerung der Schnecke 14. In Fig. 2 wirkt die Kraft zunächst auf die Schnecke 14, beispielsweise nach hinten bzw. von der Düse 32 weg, und kann über das Entkopplungselement 16 und die Einspritzhülse 18 mit dem Kraftsensor 12, z.B. einer Lastmessdose, einem Biegebalken, einem Bimetallstreifen oder einem DMS-Bauteil erfasst werden.

In einem weiteren Ausführungsbeispiel gemäß Fig. 2 ist das Entkopplungselement 16 und/oder wenigstens ein Lagerelement 22, z.B. ein Radiallager zur Lagerung einer Einspritzwelle 24 und/oder der Schnecke 14, in der Einspritzhülse 18 angeordnet, wobei das Entkopplungselement 16 und/oder das Lagerelement 22 die Einspritzwelle 24 und/oder die Schnecke 14 in der Einspritzhülse 18 drehbar gegenüber der Einspritzhülse 18 lagert. In einem weiteren Ausführungsbeispiel gemäß Fig. 2 lagern das Entkopplungselement 16 und das Lagerelement 22 die Einspritzwelle 24 und erlauben gleichzeitig eine Rotation der Einspritzwelle 24.

Für eine vorteilhaft platzsparende Ausgestaltung ist in einem bevorzugten Ausführungsbeispiel gemäß Fig. 2 der Kraftsensor 12 zwischen Motor 30 und Einspritzhülse 18 angeordnet.

In Fig. 3 sind zur Veranschaulichung des Kraftflusses bei der Kraftmessung Pfeile 28 eingezeichnet, wobei in Fig. 3 der Zustand während des Einspritzens oder Dosierens dargestellt ist. Z.B. wird beim Dosieren Schmelze von der rotierenden Schnecke 14 nach vorne zu einer (geschlossenen) Düse 32 gefördert, wobei sich die Schmelze an der Düse 32 staut, wodurch ein Druck entsteht.

Durch den Druck wird die Schnecke 14 bzw. die Einspritzwelle 24 nach hinten bzw. von der Düse 32 weg, in Fig. 3 nach links, gedrückt. Die Bewegung der Schnecke 14 nach hinten kann gebremst werden, z.B. durch den Antrieb 13, wodurch ein Staudruck entsteht und die Schmelze an der Düse 32 verdichtet wird. In diesem Fall umfasst die Translationsbewegung der Schnecke 14 (nach hinten) eine durch die Rotationsbewegung der Schnecke 14 hervorgerufene Translationsbewegung. Durch die Entkopplung der auf die und/oder von der Schnecke 14 in axialer Richtung entlang und/oder parallel der Schneckenachse A-A ausgeübten Kräfte von anderen auf die und/oder von der Schnecke 14 ausgeübten Kräfte mittels des Entkopplungselements 16 kann die auf und/oder von der Schnecke 14 in axialer Richtung entlang und/oder parallel zur Schneckenachse A-A ausgeübte Kraft bzw. der Druck, z.B. der Staudruck von dem Kraftsensor 12, vorteilhaft sehr exakt erfasst werden. Beispielweise wird in Fig. 3 die rotierende Schnecke 14 aufgrund des sich aufbauenden Staudrucks während des Dosierens nach hinten gedrückt. Dieser Druck der Schnecke 14 wirkt auf die Einspritzwelle 24, welche ebenfalls rotierend nach hinten gedrückt wird bzw. eine entsprechende Translationsbewegung ausführt. Durch das Entkopplungselement 16 wird die Rotationsbewegung der Einspritzwelle 24 von der Translationsbewegung der Einspritzwelle 24 entkoppelt, sodass lediglich der Druck in axialer Richtung der Einspritzwelle 24 auf die Einspritzhülse 18 drückt und der mit der Einspritzhülse 18 verbundene Kraftsensor 12 diesen Druck bzw. die entsprechende Kraft erfasst.

Weiter ist mit dem Kraftsensor 12 auch eine Erfassung der Einspritzkraft bzw. des Einspritzdrucks während des Einspritzens möglich. Während des Einspritzens rotiert die Schnecke in der Regel nicht. Prinzipiell denkbar ist jedoch, dass die Schnecke 14 auch während des Einspritzens rotiert. Durch das Entkopplungselement 16 kann die rotatorische Bewegung der Schnecke 14 von der translatorischen Einspritzbewegung getrennt werden und die Einspritzkraft erfasst werden.

Fig. 4 zeigt zur Veranschaulichung des Kraftflusses mit Pfeilen 28 den Zustand "negativer Staudruck" oder "Dekompression ziehen", welcher beispielsweise nach einem Einspritzvorgang einsetzt. In diesem Zustand wird über den Antrieb 13 der Einspritzkörper 20 aktiv nach hinten, also von der Düse 32 weg, bewegt, wobei aufgrund der Trägheit der im Schneckenzylinder 15 verbleibenden Restschmelze die Schnecke 14 nach vorne, also in Richtung der Düse 32 gezogen wird. Auch diese ziehende, axial wirkende Kraft bzw. Zugkraft kann mit dem Kraftsensor 12 erfasst werden. Somit kann der Druck vorteilhaft in beide Richtungen (drücken und ziehen) und somit vorteilhaft über den gesamten Spritzgießprozess erfasst werden.

In einem weiteren bevorzugten Ausführungsbeispiel ist der Kraftsensor 12 in einem unbelasteten Zustand kraftfrei. Vorteilhaft ergibt sich so eine längere Lebensdauer des Kraftsensors 12. Mit einem unbelasteten Zustand ist gemeint, dass in diesem Zustand zumindest keine "Messkräfte" auf den Kraftsensor 12 wirken, also dass z.B. kein Dosieren oder kein Einspritzen (Fig. 3) erfolgt, sich kein Staudruck aufbaut oder die Zustände "negativer Staudruck" oder "Dekompression ziehen" (Fig. 4) nicht vorliegen. Im unbelasteten Zustand greifen am Kraftsensor 12 keine Kräfte an, welche mit dem Spritzprozess assoziiert sind. Ein unbelasteter Zustand liegt z.B. aber auch vor, wenn die Spritzgießeinheit 11 nicht in Betrieb ist. Im unbelasteten Zustand ist der Kraftsensor 12 lediglich eingebaut, bevorzugt kraftfrei eingebaut. Durch den kraftfreien Einbau des Kraftsensors 12 lässt sich der Sensor bei einem Kraftangriff entsprechend in beide Richtungen gleichermaßen auslenken und die Verformung kann z.B. mittels einer Lastmessdose, einem Biegebalken, einem Bimetallstreifen, einem DMS-Bauteil oder DMS-Messelementen gemessen und in eine Kraft umgerechnet werden. Der Kraftsensor 12 ist im unbelasteten Zustand bevorzugt nicht vorgespannt.

In einem weiteren bevorzugten Ausführungsbeispiel gemäß Fig. 2 ist zwischen dem Kraftsensor 12 und der Schnecke 14 lediglich die Einspritzhülse 18 angeordnet. Betrachtet man den Kraftfluss z.B. gemäß Fig. 3 oder 4 verläuft der Kraftrahmen ausgehend von der Schnecke 14 über die Einspritzhülse 18, die Einspritzwelle 24 und das Entkopplungselement 16 in den Einspritzkörper 20. Zwischen der Schnecke 14 und dem Kraftsensor 12 ist entlang des Kraftflusses somit lediglich die Einspritzhülse 18, die Einspritzwelle 24 und das Entkopplungselement 16 angeordnet. Vorteilhaft ist somit kein weiteres Bauteil in dem Kraftfluss enthalten, wodurch keine Einflüsse aufgrund "nachgiebiger" Bauteile die Messung ungenauer machen.

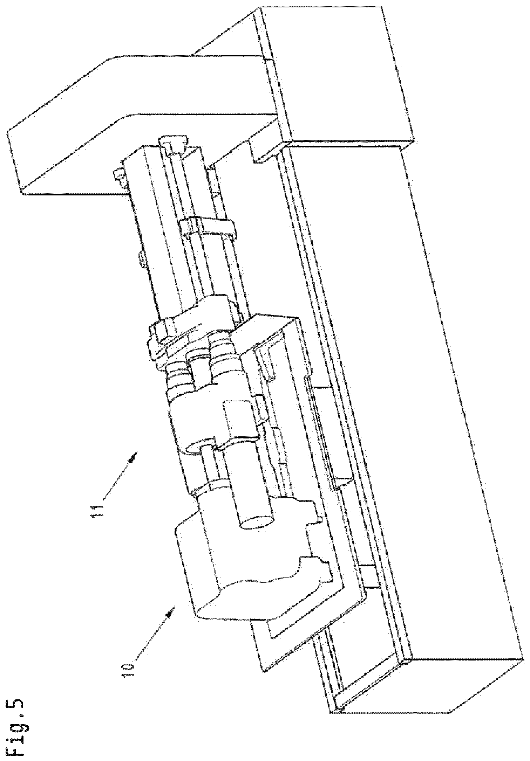

In Fig. 5 ist eine Maschine zur Verarbeitung von Kunststoffen und anderer plastifizierbarer Massen, insbesondere eine Spritzgießmaschine 10 dargestellt, wobei die Maschine eine vorher beschriebene Spritzgießeinheit 11 aufweist.

Losgelöst von einer Schnecke zeigen die Fig. 2, 3 und/oder 4 auch eine Vorrichtung zur Messung einer auf eine um eine Achse A-A rotatorisch und entlang zur Achse A-A translatorisch bewegte Maschinenkomponente 34 einer Maschine zur Verarbeitung von Kunststoffen und anderer plastifizierbarer Massen, insbesondere einer Spritzgießmaschine 10, ausgeübten Kraft. Die Vorrichtung ist dazu eingerichtet, wenigstens eine auf die und/oder von der Maschinenkomponente 34 ausgeübte axiale Kraft von anderen auf die und/oder von der Maschinenkomponente 34 ausgeübten Kräfte zu entkoppeln und die entkoppelte axiale Kraft zu erfassen.

Die Vorrichtung im Ausführungsbeispiel in Fig. 2 weist wenigstens einen Kraftsensor 12 auf, welcher drehfest gegenüber der rotatorischen Bewegung der Maschinenkomponente 34 angeordnet ist. Weiter weist die Vorrichtung wenigstens ein Entkopplungselement 16 auf, welches auf die und/oder von der Maschinenkomponente 34 in axialer Richtung entlang und/oder parallel zur Achse A-A ausgeübte Kräfte von anderen auf die und/oder von der Maschinenkomponente 34 ausgeübten Kräften entkoppelt. Der Kraftsensor 12 ist dazu eingerichtet, die auf die und/oder von der Maschinenkomponente 34 in axialer Richtung entlang und/oder parallel zur Achse A-A ausgeübte Kraft zu erfassen.

Die translatorische Bewegung der Maschinenkomponente 34 kann in einem weiteren Ausführungsbeispiel wenigstens eine durch die rotatorische Bewegung der Maschinenkomponente hervorgerufene translatorische Bewegung umfassen.

Das Entkopplungselement 16 ist im Ausführungsbeispiel gemäß Fig. 2 mit wenigstens einem in Bezug auf die rotatorische Bewegung der Maschinenkomponente 34 drehfesten Teil sowie mit wenigstens einem von der rotatorischen Bewegung der Maschinenkomponente 34 abhängigen Teil und/oder der Maschinenkomponente 34 wirkverbunden.

Der Kraftsensor 12 ist in einem Ausführungsbeispiel gemäß Fig. 2 in wenigstens einem zumindest teilweise um die Achse A-A verlaufenden Bereich und/oder symmetrisch zur Achse A-A angeordnet.

Die Kraftmessung erfolgt in einem weiteren Ausführungsbeispiel im Wesentlichen entlang und/oder parallel zu der Achse A-A der Maschinenkomponente.

Der Kraftsensor 12 ist in einem weiteren Ausführungsbeispiel gemäß Fig. 2 so eingerichtet, ausgeführt und angeordnet, dass der Kraftsensor 12 sowohl eine an der Maschinenkomponente 34 ziehende als auch eine an der Maschinenkomponente 34 drückende Kraft misst.

Der Kraftsensor 12 ist in einem weiteren Ausführungsbeispiel gemäß Fig. 2 zwischen einem Motor 30 und der Maschinenkomponente 34 angeordnet.

Das Entkopplungselement 16, das Lagerelement 22 und/oder die Maschinenkomponente 34 sind in einem weiteren Ausführungsbeispiel als quasi steif ausgeführt.

In einem weiteren bevorzugten Ausführungsbeispiel ist der Kraftsensor 12 in einem unbelasteten Zustand kraftfrei. Der Kraftsensor 12 muss somit nicht vorgespannt werden, wodurch sich vorteilhaft sehr genaue Messungen ergeben.

Der Kraftsensor 12 ist in einem weiteren bevorzugten Ausführungsbeispiel mit einer Einspritzhülse 18 und einem Einspritzkörper 20 verbunden, wobei die Einspritzhülse 18 umgeben von dem Einspritzkörper 20 angeordnet ist und/oder zwischen dem Kraftsensor 12 und der Maschinenkomponente 34 ist lediglich die Einspritzhülse 18 angeordnet.

### Bezugszeichenliste

- 10: Spritzgießmaschine
- 11: Spritzgießeinheit
- 12: Kraftsensor
- 13: Antrieb
- 14: Schnecke
- 15: Schneckenzylinder
- 16: Entkopplungselement
- 18: Einspritzhülse
- 20: Einspritzkörper
- 22: Lagerelement
- 24: Einspritzwelle
- 26: Motorwelle
- 28: Pfeil
- 30: Motor
- 32: Düse
- 34: Maschinenkomponente
- A-A: Schneckenachse

## Patentansprüche

1. Spritzgießeinheit (11), eingerichtet zur Verarbeitung von Kunststoffen und anderer plastifizierbarer Materialien, mit wenigstens einem Motor (30), eingerichtet zur rotatorischen Bewegung einer Schnecke (14) um eine Schneckenachse (A-A), wenigstens einem Antrieb (13), eingerichtet zur, unabhängig von der rotatorischen Bewegung der Schnecke (14), translatorischen Bewegung der Schnecke (14) in axialer Richtung entlang der Schneckenachse (A-A), und wenigstens einem Kraftsensor (12) zur Kraftmessung und/oder zur Bestimmung einer bezüglich der Schnecke (14) der Spritzgießeinheit (11) ausgeübten Kraft, wobei der Kraftsensor (12) drehfest gegenüber der rotatorischen Bewegung der Schnecke (14) angeordnet ist und wobei wenigstens ein Entkopplungselement (16) vorgesehen ist, welches auf die und/oder von der Schnecke (14) in axialer Richtung entlang und/oder parallel zur Schneckenachse (A-A) ausgeübte Kräfte von anderen auf die und/oder von der Schnecke (14) ausgeübten Kräften entkoppelt, und wobei der Kraftsensor (12) dazu eingerichtet ist, die auf die und/oder von der Schnecke (14) in axialer Richtung entlang und/oder parallel zur Schneckenachse (A-A) ausgeübte Kraft zu erfassen, **dadurch gekennzeichnet, dass** der Kraftsensor (12) sowohl eine an der Schnecke (14) ziehende als auch eine an der Schnecke (14) drückende Kraft misst und dass die Einspritzwelle (24), das Entkopplungselement (16), das Lagerelement (22), die Schnecke (14) und/oder der Einspritzkörper (20) als quasi steif ausgeführt sind.

2. Spritzgießeinheit (1) nach Anspruch 1, **dadurch gekennzeichnet, dass** die translatorische Bewegung der Schnecke (14) wenigstens eine durch die rotatorische Bewegung der Schnecke (14) hervorgerufene translatorische Bewegung umfasst.

3. Spritzgießeinheit nach Anspruch 1 oder 2, **dadurch gekennzeichnet, dass** das Entkopplungselement (16) mit wenigstens einem in Bezug auf die rotatorische Bewegung der Schnecke (14) drehfesten Teil der Spritzgießeinheit (11) sowie mit wenigstens einem von der rotatorischen Bewegung der Schnecke (14) abhängigen Teil der Spritzgießeinheit (11) und/oder der Schnecke (14) wirkverbunden ist.

4. Spritzgießeinheit nach einem der vorhergehenden Ansprüche, **dadurch gekennzeichnet, dass** der Kraftsensor (12) in wenigstens einem zumindest teilweise um die Schneckenachse (A-A) verlaufenden Bereich und/oder symmetrisch zur Schneckenachse (A-A) angeordnet ist.

5. Spritzgießeinheit nach einem der vorhergehenden Ansprüche, **dadurch gekennzeichnet, dass** eine Einspritzhülse (18) und ein Einspritzkörper (20) vorgesehen sind, wobei die Einspritzhülse (18) umgeben von dem Einspritzkörper (20) angeordnet und der Kraftsensor (12) mit der Einspritzhülse (18) und dem Einspritzkörper (20) verbunden ist.

6. Spritzgießeinheit nach einem der vorhergehenden Ansprüche, **dadurch gekennzeichnet, dass** der Kraftsensor (12) in einem unbelasteten Zustand kraftfrei ist.

7. Spritzgießeinheit nach einem der vorhergehenden Ansprüche, **dadurch gekennzeichnet, dass** die Kraftmessung im Wesentlichen entlang und/oder parallel zu der Schneckenachse (A)-A der Schnecke (14) erfolgt.

8. Spritzgießeinheit nach einem der vorhergehenden Ansprüche, **dadurch gekennzeichnet, dass** das Entkopplungselement (16) und/oder wenigstens ein Lagerelement (22) zur Lagerung einer Einspritzwelle (24) und/oder der Schnecke (14) in der Einspritzhülse (18) angeordnet ist, wobei das Entkopplungselement (16) und/oder das Lagerelement (22) dazu eingerichtet ist, die Einspritzwelle (24) und/oder die Schnecke (14) in der Einspritzhülse (18) drehbar gegenüber der Einspritzhülse (18) zu lagern.

9. Spritzgießeinheit nach einem der vorhergehenden Ansprüche, **dadurch gekennzeichnet, dass** der Kraftsensor (12) zwischen dem Motor (30) und der Einspritzhülse (18) angeordnet ist und/oder dass zwischen dem Kraftsensor (12) und der Schnecke (14) lediglich die Einspritzhülse (18) angeordnet ist.

10. Maschine zur Verarbeitung von Kunststoffen und anderer plastifizierbarer Massen, insbesondere eine Spritzgießmaschine (10), **dadurch gekennzeichnet, dass** die Maschine wenigstens eine Spritzgießeinheit (11) nach einem der vorhergehenden Ansprüche aufweist.

11. Vorrichtung zur Messung einer auf eine um eine Achse (A-A) rotatorisch und entlang zur Achse (A-A) translatorisch bewegte Maschinenkomponente (34) einer Maschine zur Verarbeitung von Kunststoffen und anderer plastifizierbarer Massen, insbesondere einer Spritzgießmaschine (10), ausgeübten Kraft, wobei die Vorrichtung dazu eingerichtet ist, um wenigstens eine auf die und/oder von der Maschinenkomponente (34) ausgeübte axiale Kraft von anderen auf die und/oder von der Maschinenkomponente (34) angreifenden Kräften zu entkoppeln und die entkoppelte axiale Kraft zu erfassen, wobei die Vorrichtung wenigstens einen Kraftsensor (12) aufweist, welcher drehfest gegenüber der rotatorischen Bewegung der Maschinenkomponente (34) angeordnet ist, und wenigstens ein Entkopplungselement (16) vorgesehen ist, welches auf die und/oder von der Maschinenkomponente (34) in axialer Richtung entlang und/oder parallel zur Achse (A-A) ausgeübte Kräfte von anderen auf die und/oder von der Maschinenkomponente (34) ausgeübten Kräften entkoppelt, und wobei der Kraftsensor (12) dazu eingerichtet ist, die auf die und/oder von der Maschinenkomponente (34) in axialer Richtung entlang und/oder parallel zur Achse (A-A) ausgeübte Kraft zu erfassen, **dadurch gekennzeichnet, dass** der Kraftsensor (12) so eingerichtet, ausgeführt und angeordnet ist, dass der Kraftsensor (12) sowohl eine an der Maschinenkomponente (34) ziehende als auch eine an der Maschinenkomponente (34) drückende Kraft misst und dass das Entkopplungselement (16), das Lagerelement (22) und/oder die Maschinenkomponente (34) als quasi steif ausgeführt sind.

12. Vorrichtung nach Anspruch 11, **dadurch gekennzeichnet, dass** die translatorische Bewegung der Maschinenkomponente (34) eine durch die rotatorische Bewegung der Maschinenkomponente (34) hervorgerufene translatorische Bewegung umfasst.

13. Vorrichtung nach Anspruch 11 oder 12, **dadurch gekennzeichnet, dass** das Entkopplungselement (16) mit wenigstens einem in Bezug auf die rotatorische Bewegung der Maschinenkomponente (34) drehfesten Teil sowie mit wenigstens einem von der rotatorischen Bewegung der Maschinenkomponente (34) abhängigen Teil und/oder der Maschinenkomponente (34) wirkverbunden ist.

14. Vorrichtung nach einem der Ansprüche 11 bis 13 **dadurch gekennzeichnet, dass** der Kraftsensor (12) in wenigstens einem zumindest teilweise um die Achse (A-A) verlaufenden Bereich und/oder symmetrisch zur Achse (A-A) angeordnet ist.

15. Vorrichtung nach einem der Ansprüche 11 bis 14, **dadurch gekennzeichnet, dass** die Kraftmessung im Wesentlichen entlang und/oder parallel zu der Achse (A-A) der Maschinenkomponente (34) erfolgt.

16. Vorrichtung nach einem der Ansprüche 11 bis 15, **dadurch gekennzeichnet, dass** der Kraftsensor (12) zwischen einem Motor (30) und der Maschinenkomponente (34) angeordnet ist.

17. Vorrichtung nach einem der Ansprüche 11 bis 16, **dadurch gekennzeichnet, dass** der Kraftsensor (12) in einem unbelasteten Zustand kraftfrei ist.

18. Vorrichtung nach einem der Ansprüche 11 bis 17, **dadurch gekennzeichnet, dass** der Kraftsensor (12) mit einer Einspritzhülse (18) und einem Einspritzkörper (20) verbunden ist, wobei die Einspritzhülse (18) umgeben von dem Einspritzkörper (20) angeordnet ist und/oder dass zwischen dem Kraftsensor (12) und der Maschinenkomponente (34) lediglich die Einspritzhülse (18) angeordnet ist.

## Claims

1. Injection moulding unit (11) configured for processing plastics and other plasticisable materials, having at least one motor (30) which is configured for rotationally moving a screw (14) about a screw axis (A-A), at least one drive (13) which is configured for translationally moving the screw (14) in an axial direction along the screw axis (A-A), independently of the rotational movement of the screw (14), and at least one force sensor (12) for force measurement and/or for determining a force exerted with respect to the screw (14) of the injection moulding unit (11), wherein the force sensor (12) is mounted non-rotatably with respect to the rotational movement of the screw (14) and wherein at least one decoupling element (16) is provided which decouples the forces exerted on and/or by the screw (14) in an axial direction along and/or parallel to the screw axis (A-A) from other forces exerted on and/or by the screw (14), and wherein the force sensor (12) is configured to capture the force exerted on and/or by the screw (14) in an axial direction along and/or parallel to the screw axis (A-A), **characterised in that** the force sensor (12) measures both a force pulling on the screw (14) and also a force pushing on the screw (14) and **in that** the injecting shaft (24), the decoupling element (16), the bearing element (22), the screw (14) and/or the injecting body (20) are configured to be effectively rigid.

2. Injection moulding unit (1) according to claim 1, **characterised in that** the translational movement of the screw (14) comprises at least one translational movement caused by the rotational movement of the screw (14).

3. Injection moulding unit according to claim 1 or 2, **characterised in that** the decoupling element (16) is operatively connected to at least one part of the injection moulding unit (11) that is non-rotatable with respect to the rotational movement of the screw (14) and to at least one part of the injection moulding unit (11) that is dependent upon the rotational movement of the screw (14), and/or to the screw (14).

4. Injection moulding unit according to one of the preceding claims, **characterised in that** the force sensor (12) is arranged in at least one region extending at least partially about the screw axis (A-A) and/or is arranged symmetrically to the screw axis (A-A).

5. Injection moulding unit according to one of the preceding claims, **characterised in that** an injecting sleeve (18) and an injecting body (20) are provided, wherein the injecting sleeve (18) is arranged surrounded by the injecting body (20) and the force sensor (12) is connected to the injecting sleeve (18) and the injecting body (20).

6. Injection moulding unit according to one of the preceding claims, **characterised in that**, in an unloaded state, the force sensor (12) is force-free.

7. Injection moulding unit according to one of the preceding claims, **characterised in that** the force measurement takes place substantially along and/or parallel to the screw axis (A-A) of the screw (14).

8. Injection moulding unit according to one of the preceding claims, **characterised in that** the decoupling element (16) and/or at least one bearing element (22) for mounting an injecting shaft (24) and/or the screw (14) is arranged in the injecting sleeve (18), wherein the decoupling element (16) and/or the bearing element (22) is configured to mount the injecting shaft (24) and/or the screw (14) in the injecting sleeve (18) rotatable relative to the injecting sleeve (18).

9. Injection moulding unit according to one of the preceding claims, **characterised in that** the force sensor (12) is arranged between the motor (30) and the injecting sleeve (18) and/or **in that** only the injecting sleeve (18) is arranged between the force sensor (12) and the screw (14).

10. Machine for processing plastics and other plasticisable compounds, in particular an injection moulding machine (10), **characterised in that** the machine has at least one injection moulding unit (11) according to one of the preceding claims.

11. Apparatus for measuring a force exerted on a machine component (34) of a machine for processing plastics and other plasticisable compounds, in particular an injection moulding machine (10), said machine component being moved rotationally about an axis (A-A) and translationally along the axis (A-A), wherein the apparatus is configured to decouple at least an axial force exerted on and/or by the machine component (34) from other forces exerted on and/or by the machine component (34) and to capture the decoupled axial force, wherein the apparatus has at least one force sensor (12) which is mounted non-rotatably with respect to the rotational movement of the machine component (34) and at least one decoupling element (16) is provided which decouples the forces exerted on and/or by the machine component (34) in an axial direction along and/or parallel to the axis (A-A) from other forces exerted on and/or by the machine component (34), and wherein the force sensor (12) is configured to capture the force exerted on and/or by the machine component (34) in an axial direction along and/or parallel to the axis (A-A), **characterised in that** the force sensor (12) is configured, executed and arranged such that the force sensor (12) measures both a force pulling on the machine component (34) and also a force pushing on the machine component (34) and **in that** the decoupling element (16), the bearing element (22) and/or the machine component (34) are configured to be effectively rigid.

12. Apparatus according to claim 11, **characterised in that** the translational movement of the machine component (34) comprises a translational movement caused by the rotational movement of the machine component (34).

13. Apparatus according to claim 11 or 12, **characterised in that** the decoupling element (16) is operatively connected to at least one part that is non-rotatable with respect to the rotational movement of the machine component (34) and to at least one part that is dependent upon the rotational movement of the machine component (34) and/or to the machine component (34).

14. Apparatus according to one of the claims 11 to 13, **characterised in that** the force sensor (12) is arranged in at least one region extending at least partially about the screw axis (A-A) and/or is arranged symmetrically to the screw axis (A-A).

15. Apparatus according to one of the claims 11 to 14, **characterised in that** the force measurement takes place substantially along and/or parallel to the axis (A-A) of the machine component (34).

16. Apparatus according to one of the claims 11 to 15, **characterised in that** the force sensor (12) is arranged between a motor (30) and the machine component (34).

17. Apparatus according to one of the claims 11 to 16, **characterised in that**, in an unloaded state, the force sensor (12) is force-free.

18. Apparatus according to one of the claims 11 to 17, **characterised in that** the force sensor (12) is connected to an injecting sleeve (18) and an injecting body (20), wherein the injecting sleeve (18) is arranged surrounded by the injecting body (20) and/or **in that** only the injecting sleeve (18) is arranged between the force sensor (12) and the machine component (34).

## Revendications

1. Unité de moulage par injection (11), équipée pour la transformation de matières plastiques et d'autres matériaux plastifiables, comportant au moins un moteur (30), équipée pour le mouvement de rotation d'une vis sans fin (14) autour d'un axe de vis sans fin (A-A), au moins un dispositif d'entraînement (13) équipé pour, indépendamment du mouvement de rotation de la vis sans fin (14), du mouvement de translation de la vis sans fin (14) en direction axiale le long de l'axe de vis sans fin (A-A), et au moins un capteur de force (12) pour la mesure de force et/ou la détermination d'une force exercée par rapport à la vis sans fin (14) de l'unité de moulage par injection (11), dans laquelle le capteur de force (12) est disposé fixe en rotation par rapport au mouvement de rotation de la vis sans fin (14) et dans laquelle au moins un élément de découplage (16) est prévu, lequel découple des forces exercées sur/ou par la vis sans fin (14) en direction axiale le long et/ou parallèlement à l'axe de la vis sans fin (A-A) des autres forces exercées sur et/ou par la vis sans fin (14) et dans lequel le capteur de force (12) est équipé pour mesurer la force exercée sur et/ou à partir de la vis sans fin (14) en direction axiale le long et/ou parallèlement à l'axe de la vis sans fin (A-A), **caractérisée en ce que** le capteur de force (12) mesure aussi bien une force tirant sur la vis sans fin (14) qu'une force appuyant sur la vis sans fin (14) et **en ce que** l'arbre d'injection (24), l'élément de découplage (16), l'élément formant palier (22), la vis sans fin (14) et/ou le corps d'injection (20) sont réalisés sous forme quasi-rigide.

2. Unité de moulage par injection (1) selon la revendication 1, **caractérisée en ce que** le mouvement de translation de la vis sans fin (14) comprend au moins un mouvement de translation provoqué par le mouvement de rotation de la vis sans fin (14).

3. Unité de moulage par injection selon la revendication 1 ou 2, **caractérisée en ce que** l'élément de découplage (16) est relié fonctionnellement à au moins une pièce tournante de l'unité de moulage par injection (11) fixe en rotation par rapport au mouvement de rotation de la vis sans fin (14) ainsi qu'à au moins une pièce de l'unité de moulage par injection (11) et/ou de la vis sans fin (14) dépendant du mouvement de rotation de la vis sans fin (14).

4. Unité de moulage par injection selon l'une des revendications précédentes, **caractérisée en ce que** le capteur de force (12) est disposé dans au moins une zone s'étendant au moins partiellement autour de l'axe de la vis sans fin (A-A) et/ou symétriquement par rapport à l'axe de la vis sans fin (A-A).

5. Unité de moulage par injection selon l'une des revendications précédentes, **caractérisée en ce qu'**une buse d'injection (18) et un corps d'injection (20) sont prévus, dans laquelle la buse d'injection (18) est entourée du corps d'injection (20) et le capteur de force (12) est relié à la buse d'injection (18) et au corps d'injection (20).

6. Unité de moulage par injection selon l'une des revendications précédentes, **caractérisée en ce que** le capteur de force (12) est exempt de force dans un état non chargé.

7. Unité de moulage par injection selon l'une des revendications précédentes, **caractérisée en ce que** la mesure de force s'effectue essentiellement le long de et/ou parallèlement à l'axe (A-A) de la vis sans fin (A-A).

8. Unité de moulage par injection selon l'une des revendications précédentes, **caractérisée en ce que** l'élément de découplage (16) et/ou au moins un élément formant palier (22) est disposé dans la buse d'injection (18) pour le support d'un arbre d'injection (24) et/ou de la vis sans fin (14), l'élément de découplage (16) et/ou l'élément formant palier (22) étant équipé(s) pour supporter l'arbre d'injection (24) et/ou la vis sans fin (14) dans la buse d'injection (18) de manière rotative par rapport à la buse d'injection (18).

9. Unité de moulage par injection selon l'une des revendications précédentes, **caractérisée en ce que** le capteur de force (12) est disposé entre le moteur (30) et la buse d'injection (18) et/ou **en ce que** la buse d'injection est disposée seulement entre le capteur de force (12) et la vis sans fin (14).

10. Machine pour la transformation de matières plastiques et d'autres masses plastifiables, en particulier machine de moulage par injection (10), **caractérisée en ce que** la machine présente au moins une unité de moulage par injection (11) selon l'une des revendications précédentes.

11. Dispositif pour la mesure d'une force exercée sur un composant de machine (34) d'une machine pour la transformation de matières plastiques et d'autres matières plastifiables, en particulier une machine de moulage par injection (10), tournant autour d'un axe (A-A) et mobile le long d'un axe (A-A), dans lequel le dispositif est équipé pour découpler au moins une force axiale exercée sur et/ou par le composant de machine (34) des autres forces agissant sur le et/ou à partir du composant de machine (34) et pour mesurer la force axiale découplée, dans lequel le dispositif présente au moins un capteur de force (12), lequel est disposé fixe en rotation par rapport au mouvement de rotation du composant de machine (34), et au moins un élément de découplage (16) est prévu, lequel découple des forces exercées sur et/ou par le composant de machine (34) en direction axiale le long et/ou parallèlement à l'axe (A-A) des autres forces exercées sur et/ou par le composant de machine (34), et dans lequel le capteur de force (12) est équipé pour mesurer la force exercée sur et/ou par le composant de machine (34) en direction axiale le long et/ou parallèlement à l'axe (A-A), **caractérisé en ce que** le capteur de force (12) est équipé, réalisé et disposé de telle sorte que le capteur de force (12) mesure aussi bien une force tirant sur le composant de machine (34) qu'une force appuyant sur lui et **en ce que** l'élément de couplage (16), l'élément formant palier (22) et/ou le composant de machine (34) sont réalisés sous forme quasi-rigide.

12. Dispositif selon la revendication 11, **caractérisé en ce que** le mouvement de translation du composant de machine (34) comprend un mouvement de translation provoqué par le mouvement de rotation du composant de machine (34).

13. Dispositif selon la revendication 11 ou 12, **caractérisé en ce que** l'élément de découplage (16) est relié fonctionnellement à au moins une pièce fixe en rotation par rapport au mouvement de rotation du composant de machine (34) ainsi qu'à au moins une pièce dépendante du mouvement de rotation du composant de machine (34) et/ou au composant de machine (34).

14. Dispositif selon l'une des revendications 11 à 13, **caractérisé en ce que** le capteur de force (12) est disposé dans au moins une zone s'étendant au moins partiellement le long de l'axe (A-A) et/ou symétriquement à l'axe (A-A).

15. Dispositif selon l'une des revendications 11 à 14, **caractérisé en ce que** la mesure de force s'effectue essentiellement le long et/ou parallèlement à l'axe (A-A) du composant de machine (34).

16. Dispositif selon l'une des revendications 11 à 15, **caractérisé en ce que** le capteur de force (12) est disposé entre un moteur (30) et le composant de machine (34).

17. Dispositif selon l'une des revendications 11 à 16, **caractérisé en ce que** le capteur de force (12) est exempt de force dans un état non chargé.

18. Dispositif selon l'une des revendications 11 à 17, **caractérisé en ce que** le capteur de force (12) est relié à une buse d'injection (18) et à un corps d'injection (20), la buse d'injection (18) étant entourée par le corps d'injection (20) et/ou la buse d'injection étant seulement disposée entre le capteur de force (12) et le composant de machine (34).
